# EUROPEAN PATENT SPECIFICATION

(11) **EP 0 642 884 B1**
(45) Date of publication and mention of the grant of the patent: **03.03.1999**
(21) Application number: 94202594.1
(22) Date of filing: 09.09.1994
(51) Int. Cl.: B23Q 16/10

(54) **Turret toolpost with epicyclic transmission and positioning unit having continuous rotation of the driving motor**
Revolverwerkzeughalter mit planetarem Antrieb und Positioniereinheit mit einer kontinuierlichen Rotation des Antriebsmotores
Porte outil revolver avec transmission planétaire et unité de positionnement présentant une rotation continue du moteur d'entraînement

(30) Priority: 13.09.1993 IT MI931970
(43) Date of publication of application: 15.03.1995
(73) Proprietor: BARUFFALDI S.P.A., I-20097 San Donato Milanese Milan (IT)
(72) Inventor: Natale, Mario, San Maurizio Al Lambro (Milano) (IT)
(74) Representative: Raimondi, Alfredo, Dott. Ing. Prof.

(56) References cited:
- EP-A- 0 299 556
- EP-A- 0 343 329
- EP-A- 0 343 334
- DE-A- 3 216 994

## Description

The object of this invention is an electromechanically-driven turret toolpost with epicycloidal transmission with the driving motor rotating continuously in the same direction during each tool-changing cycle, for the programmed transfer in relation to a working position of one of several tools carried by a plate of the said turret.

It is known that the various machining operations on a large number of workpieces require the use in succession, for the same workpiece, of several tools according to a programmed and automatically controlled sequence.

To such end the workpiece is usually mounted on the lathe or like work-centre, which is fitted with an auxiliary arrangement consisting of a turret holding several tools arranged radially and/or frontally on a rotary plate, which tools may from time to time be set in relation to the working position by the controlled rotation of such plate, in order to perform the required machining of the workpiece under the control of an electronic unit.

A basic requirement which arises in such operations is the reduction of down time, in particular the time needed to undertake tool-changing and resumption of machining of the workpiece.

Such down time, named for convenience as "cycle time", is substantially that required to enable the turret to execute all the movements capable of setting the new tool in the working position.

For this purpose, the turret requires an initial "opening time" to become released from the fixed working position, a "rotation time" to turn in either direction according to the shortest distance, so as to set the new tool in the working position, and a "closure time" to stop and return to the locked condition.

Such operations are performed, in known turrets, using mechanical devices which transmit the rotation of a driving motor to the rotary plate and at the same time control the operation of the means of locking and unlocking, which have particularly complex and costly structures through which the result of increasing the running speed of the various moving parts of the turret is compromised by the fact that it is not possible to differentiate the speed of rotation of the internal parts of the turret from the speed of rotation of the plate With such turrets of known type the possibility of reducing the cycle time is substantially linked to the increase in the number of revolutions of the driving motor, but such increase, in addition to increasing the speed of the parts inside the turret for the unlocking and relocking thereof, also brings about an increase in the speed of rotation of the plate, with a resulting increase in the moments of inertia due to the masses present and an increase in the accelerations and decelerations needed for the control of such masses, to the detriment of the precision, noise and dimensioning of the various parts.

There is also known from EP-A-0 299 556 in the name of the same applicant a tool-holder turret according to the preamble of claim 1, in which the movement of the moving parts is obtained via a transmission of epicycloidal type which makes it possible to limit the dimensioning of the component parts of the turret and to increase the running speed thereof with respect to the speed of rotation of the chuck. In such design, however, the cycle times are still comparatively long because of the need to close the moving internal moving parts and to reverse the direction of rotation of the motor for each phase of locking of each cycle of the turret.

There is therefore posed the technical problem of providing a turret toolpost of epicycloidal type which will make it possible to reduce the cycle time without the need to increase the speed of rotation of the plate and which is furthermore of particularly simple and reliable design.

Within the context of such problem, a further need is to reduce as much as possible the noise of the turret during the closure phase, which noise is principally due to the approximation of the alignment of the teeth of the fixed crownwheel with the teeth of the moving crownwheel integral with the plate.

In addition to this, and as a result of the increase in speed, it is preferable to bring about stoppage of the turret control arrangements via a positive control unit of high accuracy and reliability, rather than via a friction brake of known type.

Such results are obtained, according to the present invention, which provides a turret toolpost for lathes or like work-centres, by the features of claim 1.

Further details may be obtained from the following description given with reference to the attached drawings, which show:
- In figs. 1a, 1b, 1c, 1d :: a schematic view of a turret toolpost according to the invention shown in axial section, respectively: closed, open in rotation, in the initial closure phase, and in the final closure phase;
- In figs. 2a, 2b, 2c :: the section according to plane II-II of figures 1a, 1b, 1c respectively;
- In figs. 3a, 3b, 3c :: the section according to plane III-III of figures 1a, 1b, 1c respectively;
- In figs. 4a, 4c :: the section according to plotting plane IV-IV of figures 1a, 1b, 1c respectively;
- In figure 5 :: a functional diagram of the turret locking arrangements in closed position;
- In figure 6 :: a section according to plotting plane II-II in relation to the initial rotation for opening the turret;
- In figure 7 :: the diagram of figure 5 with the turret in the open position;
- In figures 8, 9, 10:: respectively, the section according to plotting planes III-III, IV-IV and X-X in relation to the final phase of rotation, and
- In figure 10c :: the section according to plotting plane X-X of fig. 1c, and
- In figures 11, 12 :: schematic views of the alignment of the teeth of the fixed, rotary and locking crownwheels;
- In figure 13 :: an example of alternative implementation of the arrangements for stopping and positioning the rotary crownwheel;
- In figures 14, 14a, 14b :: a section according to plotting plane XIV-XIV of figure 13 corresponding to the phases of turret open, turret in the process of stopping the moving crownwheel and accurate positioning of the latter, respectively.

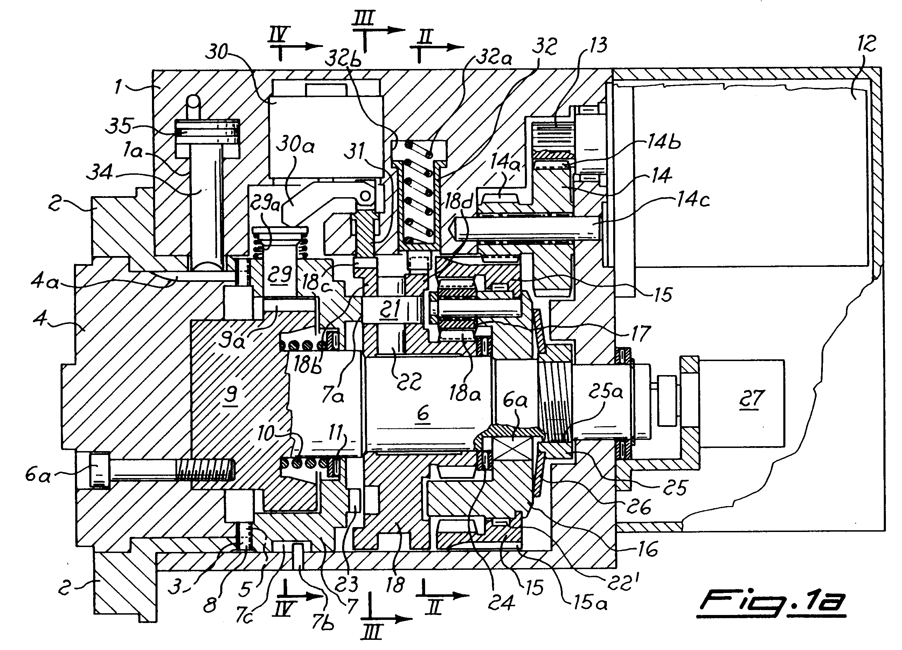

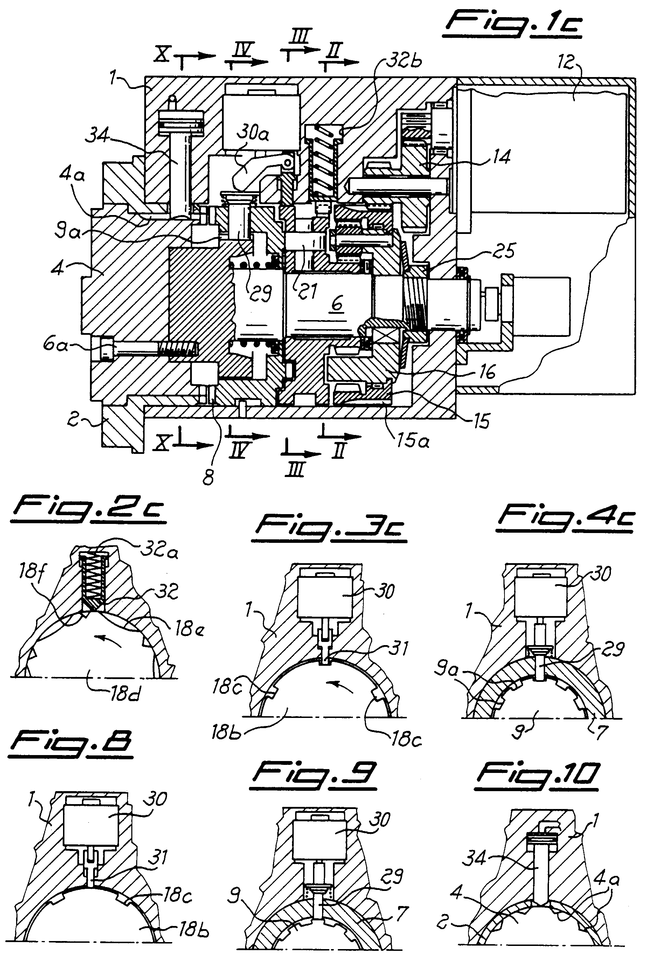

As shown in figure 1a, the turret according to the invention consists of an external support housing 1 comprising a fixed crownwheel 2 provided with front teeth 3.

Within housing 1 may rotate a further crownwheel 4 to which may be attached the turret plate (not shown). Rotary crownwheel 4 is provided with front teeth 5, concentric and adjacent to teeth 3 of the fixed crownwheel.

To crownwheel 4 is attached, by means of screws or the like 6a, an indexing plate 9 constituting the end of a shaft 6 capable of rotating within housing 1.

Around shaft 6 is located a locking ring 7, capable of moving axially, provided with front teeth 8 facing teeth 3, 5 and capable of meshing with the latter, thus bringing about the engagement of rotary crownwheel 4 with fixed crownwheel 2. Between indexing plate 9 and ring 7 is interposed a spring 10, with an appropriate thrust bearing 11 acting in such a way as to maintain ring 7 clear of plate 9 and therefore teeth 8 out of mesh with teeth 3, 5. Ring 7 is furthermore provided on its circumferential profile with a cavity 7c cooperating with a pin 7b to prevent the rotation of said ring 7 but at the same making possible the axial movement thereof.

Within housing 1 is fitted a driving motor 12 provided with a pinion 13 in mesh with first teeth 14b of a coaxial double-tooth gear 14. Rotating around a pin 14c, gear 14 causes to rotate, via second teeth 14a, a transmission unit of epicycloidal type consisting of a crownwheel 15 with external teeth 15a in mesh with teeth 14a of gear 14; a satellite-holding unit 16 carrying several satellite gears 17 arranged on a circumference, only one of which is shown in the figures; and a central gear 18 coaxial to shaft 6 and capable of rotating in relation thereto.

Central gear 18 carries in turn a multiplicity of rollers 21, supported on appropriate shafts 22 of radial axis with respect to shaft 6 and which bear on front cam profile 7a of locking ring 7 with which they interact as described in greater detail hereinafter.

Ring gear 15 is supported in rotation by bearings 22' around planet carrier 16 which is in turn integral in rotation, via key 6a, with shaft 6. Satellite gears 17 are furthermore in mesh both with teeth 18a of central gear 18 carrying rollers 21 and with the internal teeth of ring gear 15.

By means of the epicycloidal unit described above, the rotary movement imparted to ring gear 15 may be alternatively transmitted to either teeth 18a of roller-holding central gear 18 or 16a of planet carrier 16 integral with shaft 6, in relation to the locking against rotation of the other teeth.

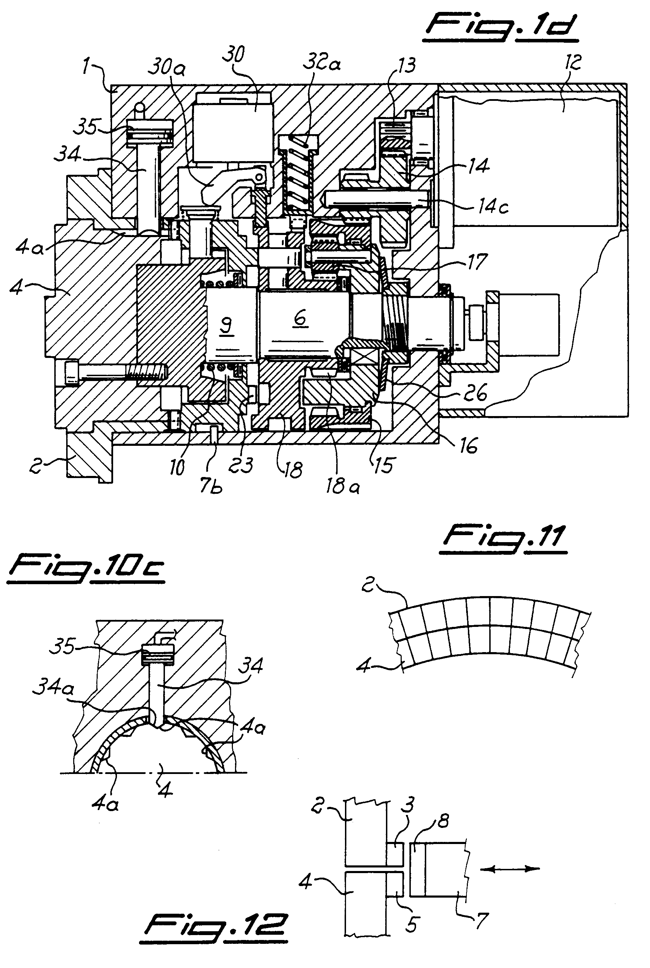

As illustrated in the partial sections of figs. 2a and 3a, central gear 18 carrying rollers 21 has a circumferential surface with two profiles: a first, front profile 18b on which are provided substantially rectangular notches 18c, and a second, rear profile 18d on which are provided alternatively throughout the circumference cavities provided with cams, respectively 18e with widely spaced flanks and 18f with narrowly-spaced flanks, in which the thrust action of a spring 32a causes to descend a pin 32 housed in an appropriate radial seat 32b in fixed housing 1.

Spring 10 exerts a thrust action which tends to maintain crownwheel 7 clear of the rotary crownwheel and with front profile 7a pressing against rollers 21.

Central gear 18 bears in an axial sense on planet carrier 16 with an interposed thrust bearing 24, and in turn planet carrier 16 bears against stop ring 25, integral with shaft 6 by means of screw thread 25a, with an interposed cup spring assembly 26.

To the rear end of shaft 6 is attached in rotation an angular position setting 27, commercially termed "encoder", of known type.

Indexing plate 9 integral with shaft 6 has on its outer surface a multiplicity of radial notches 9a, in number and angular position corresponding to the number of stop positions of the turret, that is, to the number of tools carried by the chuck integral with rotary crownwheel 4. In relation to such notches 9a ring 7 houses a radial latch 29 capable of being inserted therein, against which the outward turned end causes to operate, in opposition to the thrust action of a spring 29a, the moving component of an electromagnetic actuator 30 through the interposition of an arm of a lever 30a hinged to a further locking component 31 radially facing the notches of front circumferential profile 18b of central gear 18 carrying rollers 21.

The operation of actuator 30 therefore brings about the insertion of latch 29 and of locking component 31 into respective notches 9a, 18c of indexing plate 9 and of roller-carrying central gear 18 respectively one in succession to the other as a result of the different stopping times of plate 9 and central gear 18.

In the front part of fixed housing 1 (figs. 1a, 10c) and in relation to notches 4a of rotary crownwheel 4 is provided a radial seat 1a capable of accommodating a radial pin 34 which may be operated by an actuator 35 in such a way as to insert the innermost end, with respect to the axis of rotation, into such notches 4a of rotary crownwheel 4. As will become clearer later, the tapered shape of the end of the pin and of notches 4a makes it possible to obtain perfect alignment of teeth 3 and 5 of fixed 2 and rotary 4 crownwheels in relation to the meshing of teeth 8 of ring 7 at the time of locking the turret (figs. 11, 12). Under normal working conditions, the turret is in the closed (or locked) position as shown schematically in figures 1a, 2a, 3a, 4a and 5. Teeth 3, 5 and 8 are in mesh, centring pin 34 is retracted, rollers 21 are in the intermediate position between grooves 23 of ring 7, which is therefore held pressed against rotary crownwheel 4; correspondingly, latch 29 is lifted clear of notch 9a of indexing plate 9, locking component 31 is lifted clear of seats 18c of front profile 18b of roller-carrying central gear 18 and resistance pin 32 is inserted in cams 18e with slightly inclined flanks of rear profile 18d of central gear 18.

In the locked turret configuration described above, locking is ensured by cup springs 26.

At the time of changing the tool, and therefore at the time of commencement of the "cycle time", the control unit selects the direction of rotation of the turret which causes the preselected station to be reached via the shortest angular distance and initiates the opening sequence of the turret by bringing about the rotation of motor 12 in the preselected direction (anticlockwise in the example) which, with gear 13, places in rotation gear 14 and therefore ring gear 15, while planet carrier 16 carrying satellites 17, being integral in rotation with shaft 6 and with rotary crownwheel 4, is maintained out of mesh with front teeth 3, 8, 5, not yet disengaged from retracting ring 7. The rotation of satellites 17 therefore brings about the rotation of central gear 18 carrying rollers 21, which gear opposes alone the reduced resistance caused by the rubbing of pin 32 on the slightly inclined flanks of cams 18e of rear profile 18d.

The rotation of central gear 18, for example in the direction of arrow F in fig. 6, carries rollers 21 over cam profile 23 of ring 7 which, under the action of spring 10, moves away from crownwheels 2 and 4, thus releasing by rotation rotary said crownwheel 4 (fig. 7).

Simultaneously, the rotation of central gear 18 carries cams 18f with greatly inclined flanks of rear profile 18d, in relation to resistance pin 32, which is pressed between such notches of spring 32a (fig. 2b).

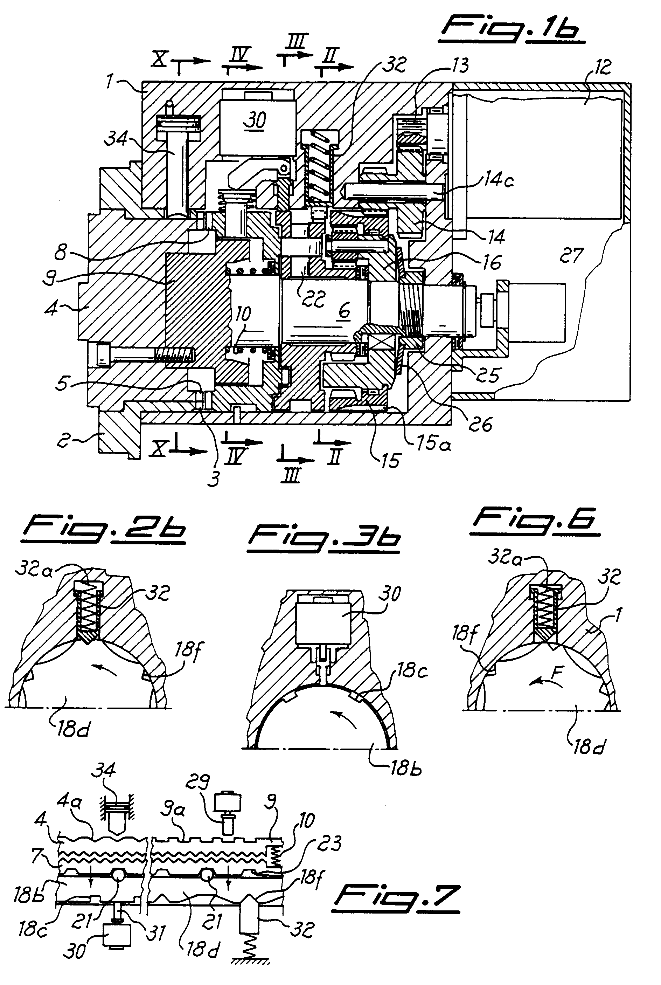

At this point, crownwheel 4 is free (fig. 1b, 7) while central gear 18 exerts higher resistance to rotation, so that satellites 17 continue to rotate around their own axis and place in rotation planet carrier 16 which causes shaft 6 to rotate to the new angular setting preset by the control unit which - once crownwheel 4 has completed the programmed rotation (the last phase of which is shown in outline in figs. 8, 9, 10 which will not be described in detail) and has arrived in the vicinity of this preselected position, as read by "encoder" 27 - starts up the initial phase of closure (figs. 1c, 2c, 3c, 4c) by operating electromagnet 30 which, acting on lever 30a, brings pressure to bear both on pin 31, which, however, remains motionless due to not being confronted by a notch 18c, and on latch 29 which engages a notch 9a of indexing plate 9 resulting in stoppage of crownwheel 4 and shaft 6.

At the same time is also operated (fig. 10c) centring pin 34 which, via inclined surfaces 34a, takes up any clearance existing between stop pin 29 and notch 9a, by perfectly aligning the profiles of teeth 3 and 5 of crownwheels 4 and 2.

At this point, with shaft 6 locked, there is also locked planet carrier 16 integral therewith by means of key 6a, and the continued rotation of satellites 17 determines the further rotation of roller-carrying central gear 18 - which has a low-resistance cavity 18e in relation to resistance pin 32 and rollers 21 - out of cams 23 and into intermediate position 7a between them by exerting an axial thrust, which is greater than the resistance of spring 10, on the front profile of ring 7, which is again pressed axially towards crownwheels 2 and 4 thus bringing about the meshing of its own teeth 8 with corresponding teeth 3 and 5 and therefore locking of the crownwheel. To complete the locking of the turret, central gear 18 continues to rotate and places a notch 18c of front circumferential profile 18b in relation to pin 31 which, on entering into the said notch, brings about locking of the planetary gear and of the entire transmission, resulting in stoppage of the motor, as well as the sending (by sensor, not illustrated) of an end-of-cycle signal which brings about the restoration of all the initial conditions of the various actuators.

It should be emphasized that with the turret according to the invention it is possible to carry out the entire operation of opening, rotation and closure by causing to rotate central gear 18 carrying rollers 21 always in the same direction preselected by the control unit in order to minimize that particular angular distance. This makes it possible to avoid the need for stopping the motor and reversing its direction of rotation, a typical occurrence with known turrets which is the cause of delays in the completion of the phases of opening and closure of the said turret. In other words, it is clear that the turret according to the invention makes it possible to reduce substantially the cycle time by increasing the running speed of the internal control components of the turret without the need to increase the speed of rotation of the chuck, thus reducing down time during the turret opening and closure phases, the accuracy and repeatability of stoppage being ensured by the operation of mechanical stops rather than by inaccurate friction braking arrangements.

Additionally, the alignment of teeth 3, 5 of fixed 2 and rotary 4 crownwheels, obtained by means of centring pin 34 prior to the axial return of ring 7 to the closed position, makes it possible to reduce substantially the noise of the turret during the closure phase.

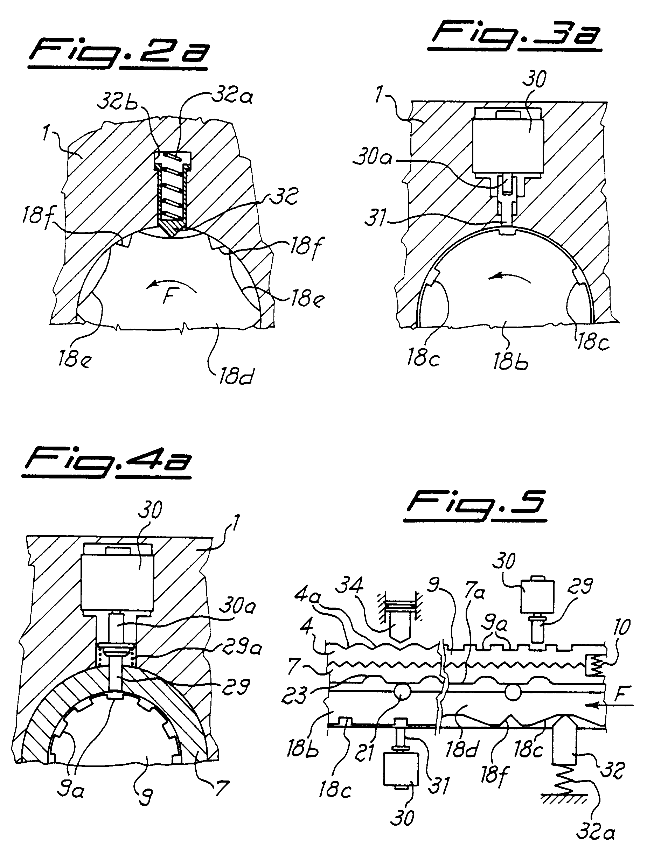

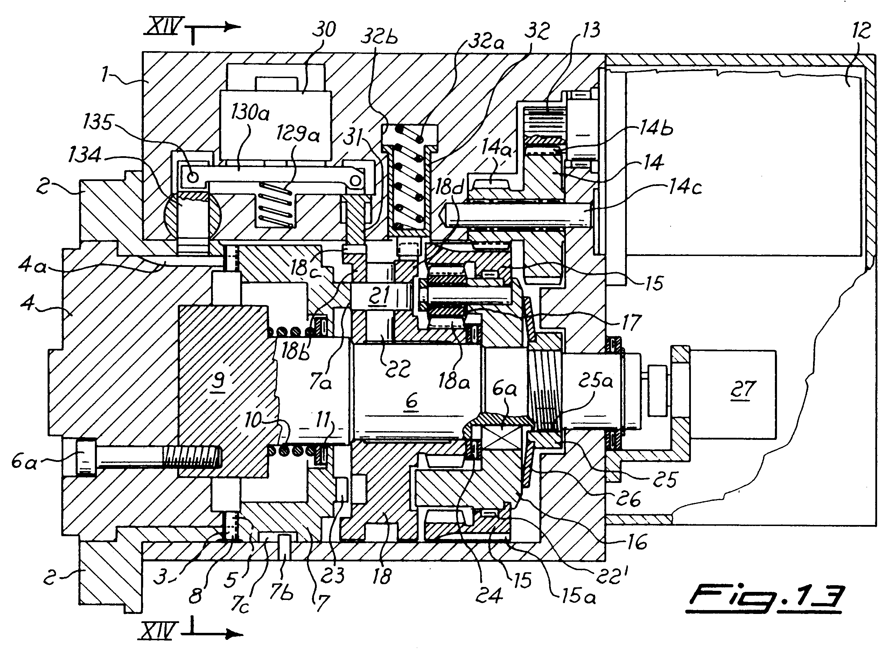

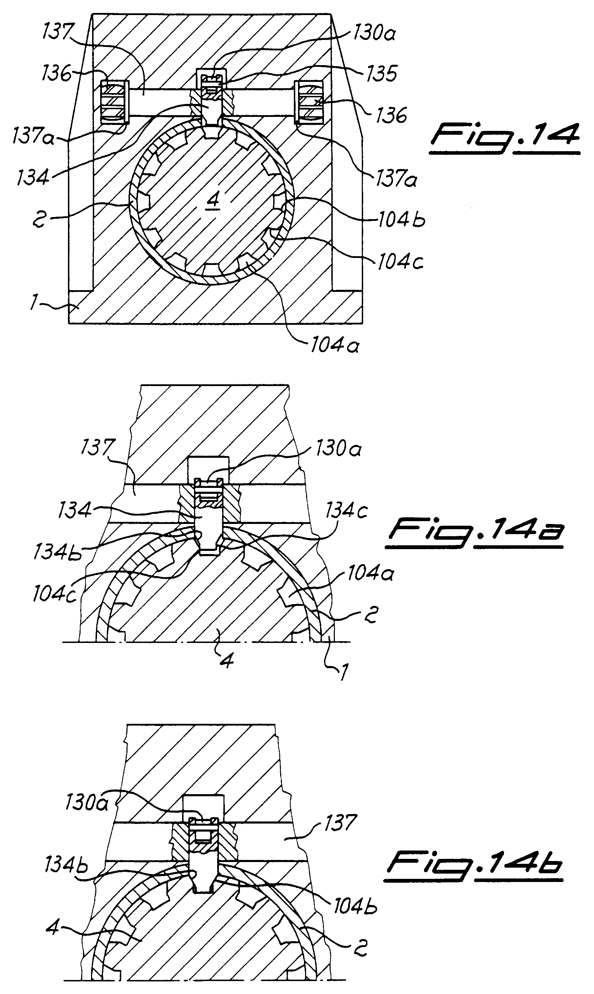

In figures 13 and 14 is illustrated an alternative method for implementing the means of stoppage of crownwheel 4 and for centring such crownwheel 4 with fixed crownwheel 2. Such means are substantially comprised of a single pin 134 sliding radially inside an axially-moving support shaft 137 the opposite ends 137a of which are placed against appropriate flexible shock-absorbing pads 136.

The upper end of pin 134 is made integral, via a pin 135, with the end of lever 130a opposite the end integral with means 31 of locking of central gear 18.

Such lever 130a is operated by actuator 30 against the thrust action of a spring 129a.

The free end of pin 134 has a variable profile forming a truncated cone surface 134b followed by a cylindrical surface 134c.

Correspondingly, cavities 104a of rotary crownwheel 4 have in turn an outermost surface 104b of truncated cone shape and an innermost surface 104c of cylindrical shape.

With such methods of implementation it is therefore possible to avoid the use both of the indexing plate and of locking pin 29 of such indexing plate, since in the initial phase of insertion of pin 134 into cavity 104 (fig. 14b) there is obtained the locking of central gear 18 through the cooperation of cylindrical surfaces 134b and 104b respectively, while the further insertion of pin 134 into cavities 104 brings about perfect centring of crown wheels 4 and 2 through the relative action of truncated cone surfaces 134c and 104a respectively.

## Claims

1. A tool-holder turret for lathes or like work-centres, comprising
a support housing (1) equipped with a fixed crownwheel (21 and carrying a rotary component fitted with a crownwheel (4) to which is attached a plate for holding a multiplicity of tools, each of which is capable of being transferred to the working position by rotation of said rotary component,
an indexing plate (9) attached to said rotary component and integral with an end of a coaxial shaft (6),
the front teeth (3,5) of said fixed (2) and rotary (4) crownwheels capable of being meshed to one another via an axially movable ring (7) provided with front teeth (8) facing the teeth (3,5) of said fixed and rotary crownwheels and with a cam profile (7a),
means (29) for stopping rotation of said rotary crown wheel (4),
a motor (12) for rotating said shaft (6) via a gear (14) and a transmission unit of epicycloidal type comprising a Planet carrier (16) carrying planet wheels (17) geared to a central gear (18) coaxial and rotatable with respect to the shaft (6) and carrying rollers cooperating with said cam profile (7a) for the axial operation of the ring (7),
locking means (31) capable of cooperating with notches (18c) of a first circumferential profile (18b) of said central gear (18) so as to lock said central gear (18),
characterised by
said transmission unit comprising a ring gear (15) driven by the motor via the gear (14) and radially geared to the planet carrier (16) via the planet wheels themselves, the planet carrier (16) being fixed for rotation to the shaft (6), such that the rotary movement imparted to the ring gear (15) is alternatively transmitted to either the central gear (18) or to the planet carrier and the shaft,
means (32) of resistance to rotation capable of cooperating with cams (18e, 18f) of a second circumferential profile (18d) of said central gear (18), and by
control means (34,134) for aligning the teeth (5) of said rotary crownwheel (4) relative to the teeth (3) of the fixed crownwheel (2),
such combination making it possible to effect each turret opening cycle, rotation for tool-changing and closure of the turret with continuous rotation of motor (12) in the same direction and with the speed of rotation of central gear (18) being higher than the speed of rotation of rotary crownwheel (4), and also with reduced noise of axial meshing of the teeth (8) of said ring (7) moving axially on the teeth (3,5) of said fixed (2) and rotary (4) crownwheels.

2. An epicycloidal turret according to claim 1, characterized in that such first profile (18d) of central gear (18) has a substantially continuous development with cams (18e, 18f) along the entire circumference.

3. An epicycloidal turret according to claim 1, characterized in that such cams (18e, 18f) have, respectively, slightly inclined flanks and greatly inclined flanks and are arranged alternately to one another along circumferential profile (18d).

4. An epicycloidal turret according to claim 1, characterized in that such first profile (18d) is an external profile of central gear (18).

5. An epicycloidal turret according to claim 1, characterized in that such means of resistance cooperating with cams (18e, 18f) are substantially comprised of a thrust pin (32) in engagement with the cams of flexible means (32a) reacting against fixed housing (1) of the turret.

6. An epicycloidal turret according to claims 1 and 4, characterized in that such pin (32) is radial.

7. An epicycloidal turret according to claim 1, characterized in that such notches (18c) of such second circumferential profile (18b) of central gear (18) are arranged with discontinuities along the said circumferential profile.

8. An epicycloidal turret according to claim 1, characterized in that such second profile (18b) is an external circumferential profile of central gear (18).

9. An epicycloidal turret according to claim 1, characterized in that such means of locking (31) are substantially comprised of a pin (31) connected via a lever device (30a) to a latch (29), such pin and latch being operated by an actuator (30) controlled by the central control unit programming the tool-changing sequence.

10. An epicycloidal turret according to claims 1 and 8, characterized in that such pin (31) and latch (29) are radial.

11. An epicycloidal turret according to claim 1, characterized in that such means of alignment of the profiles of teeth (3, 5) of rotary (4) and fixed (2) crownwheels are substantially comprised of a pin (34) capable of sliding in both directions inside a radial cavity (1a) of fixed housing (1) and provided with a tapered end capable of engaging corresponding tapered seats (4a) of rotary crownwheel (4), such pin being operated on emerging from cavity (1a) by an actuator (30) operated by the central programming control unit in relation to the engagement of means of locking (29) with notches (9a) of indexing plate (9) on completion of each revolution of the turret.

12. A turret according to claim 1, characterized in that such means of locking of the rotation of crownwheel (4) and of alignment of fixed (2) and rotary (4) crownwheels are comprised of a single radial pin (134) provided with a free end of variable profile capable of cooperating with appropriate seats (104) of crownwheel (4) provided in turn with a corresponding shape of variable profile.

13. A turret according to claims 1 and 12, characterized in that such variable profile of the end of pin (134) and of cavities (104) is partly of truncated cone shape (134b, 104b) and partly of cylindrical shape (134c, 104c).

## Patentansprüche

1. Ein Werkzeughalterturm für Drehmaschinen oder dergleichen Bearbeitungszentren, aufweisend:
ein Traggehäuse (1), das mit einem feststehenden Kronenrad (2) ausgerüstet ist und das eine drehbare Komponente trägt, die mit einem Kronenrad (4) versehen ist, an welchem eine Platte zum Halten einer Vielzahl von Werkzeugen angebracht ist, wobei jedes von diesen dazu befähigt ist, zu der Bearbeitungsposition durch Drehen der genannten drehbaren Komponente überführt zu werden;
eine Schaltscheibe (9), die an der genannten drehbaren Komponente angebracht und mit einem Ende einer koaxialen Welle (6) einstückig ist,
wobei die vorderen Zähne (3) des genannten feststehenden Kronenrads (2) und die vorderen Zähne (5) des genannten drehbaren Kronenrads (4) dazu befähigt sind, mittels eines axial bewegbaren Rings (7) miteinander in Eingriff zu stehen, welcher mit vorderen Zähnen (8), welche zu den Zähnen (3 bzw. 5) des genannten feststehenden Kronenrads bzw. des genannten drehbaren Kronenrads weisen, und mit einem Steuerflächenprofil (7a) versehen ist;
eine Einrichtung (29) zum Anhalten der Drehung des genannten drehbaren Kronenrads (4);
einen Motor (12) zum Drehen der genannten Welle (6) mittels eines Zahnrads (14) und einer Getriebeeinheit vom epizykloidalen Typ, welche einen Planeterradträger (16) aufweist, der Planetenräder (17) trägt, die mit einem zentralen Zahnrad (18) in Eingriff stehen, das in Bezug auf die Welle (6) koaxial und drehbar ist und Rollen trägt, welche mit dem genannten Steuerflächenprofil (7a) für den axialen Betrieb des Rings (7) zusammenarbeiten; und
Verriegelungsmittel (31), die dazu befähigt sind, mit Kerben (18c) eines ersten Umfangsprofils (18b) des genannten zentralen Zahnrads (18) zusammenzuarbeiten, um das genannte zentrale Zahnrad (18) zu verriegeln,
**dadurch gekennzeichnet**, daß die genannte Getriebeeinheit ein Hohlrad (15), das durch den Motor mittels des Zahnrads (14) angetrieben ist und das mit dem Planetenradträger (16) mittels der Planetenräder selbst radial in Eingriff steht, wobei der Planetenradträger (16) für eine Drehung mit der Welle (6) befestigt ist, derart, daß die Drehbewegung, welche dem Hohlrad (15) auferlegt wird, alternativ entweder zu dem zentralen Zahnrad (18) oder zu dem Planetenradträger und der Welle übertragen wird,
daß eine Einrichtung (32) vorgesehen ist, um der Drehung einen Widerstand entgegenzusetzen, wobei diese Einrichtung (32) dazu befähigt ist, mit Steuerflächen (18e, 18f) eines zweiten Umfangsprofils (18d) des genannten zentralen Zahnrads (18) zusammenzuarbeiten, und
daß eine Steuereinrichtung (34, 134) vorgesehen ist, um die Zähne (5) des genannten drehbaren Kronenrads (4) relativ zu den Zähnen (3) des feststehenden Kronenrads (2) auszurichten,
wobei eine derartige Kombination es ermöglicht, jeden Turmöffnungszyklus, eine Drehung für Werkzeugwechsel und Schließen des Turms bei kontinuierlicher Drehung des Motors (12) in derselben Richtung zu bewirken, wobei die Drehzahl des zentralen Zahnrads (18) höher ist als die Drehzahl des drehbaren Kronenrads (4) und wobei ferner das Geräusch des axialen Ineingriffkommens der Zähne (8) des genannten Rings (7) reduziert ist, der sich axial an den Zähnen (3) bzw. den Zähnen (5) des genannten feststehenden Kronenrads (2) bzw. des drehbaren Kronenrads (4) bewegt.

2. Ein epizykloidaler Turm nach Anspruch 1, **dadurch gekennzeichnet**, daß ein derartiges erstes Profil (18d) des zentralen Zahnrads (18) eine im wesentlichen kontinuierliche Abwicklung mit Steuerflächen (18e, 18f) entlang des gesamten Umfanges aufweist.

3. Ein epizykloidaler Turm nach Anspruch 1, **dadurch gekennzeichnet**, daß eine derartige Steuerfläche (18e bzw. 18f) leicht geneigte Flanken bzw. stark geneigte Flanken aufweist und daß derartige Steuerflächen (18e, 18f) abwechselnd zueinander entlang des Umfangsprofils (18d) angeordnet sind.

4. Ein epizykloidaler Turm nach Anspruch 1, **dadurch gekennzeichnet**, daß ein derartiges erstes Profil (18d) ein äußeres Profil des zentralen Zahnrads (18) ist.

5. Ein epizykloidaler Turm nach Anspruch 1, **dadurch gekennzeichnet**, daß eine derartige, mit Steuerflächen (18e, 18f) zusammenarbeitende Einrichtung, um Widerstand entgegenzusetzen, im wesentlichen aus einem Schubbolzen (32) in Eingriff mit den Steuerflächen einer flexiblen Einrichtung (32a) besteht, welche gegen das feststehende Gehäuse (1) des Turms wirkt.

6. Ein epizykloidaler Turm nach Ansprüchen 1 und 4, **dadurch gekennzeichnet**, daß ein derartiger Bolzen (32) radial ist.

7. Ein epizykloidaler Turm nach Anspruch 1, **dadurch gekennzeichnet**, daß derartige Kerben (18c) eines derartigen zweiten Umfangsprofils (18b) des zentralen Zahnrads (18) mit Diskontinuitäten entlang des genannten Umfangsprofils angeordnet sind.

8. Ein epizykloidaler Turm nach Anspruch 1, **dadurch gekennzeichnet**, daß ein derartiges zweites Profil (18b) ein äußeres Umfangsprofil des zentralen Zahnrads (18) ist.

9. Ein epizykloidaler Turm nach Anspruch 1, **dadurch gekennzeichnet**, daß eine derartige Einrichtung zum Verriegeln (31) im wesentlichen aus einem Stift (31) besteht, der mittels einer Hebeleinrichtung (30a) mit einem Sperrelement (29) verbunden ist, wobei ein derartiger Stift und ein derartiges Sperrelement durch einen Betätiger (30) betätigt werden, der durch die zentrale Steuereinheit zum Programmieren der Werkzeugwechselabfolge gesteuert wird.

10. Ein epizykloidaler Turm nach Ansprüchen 1 und 8, **dadurch gekennzeichnet**, daß ein derartiger Stift (31) und ein derartiges Sperrelement (29) radial sind.

11. Ein epizykloidaler Turm nach Anspruch 1, **dadurch gekennzeichnet**, daß eine derartige Einrichtung zum Ausrichten der Profile der Zähne (3 bzw. 5) des drehbaren Kronenrads (4) bzw. des feststehenden Kronenrads (2) im wesentlichen aus einem Bolzen (34) besteht, welcher zur Bewegung in beiden Richtungen innerhalb eines radialen Hohlraums (1a) des feststehenden Gehäuses (1) befähigt ist und mit einem verjüngten Ende versehen ist, das dazu befähigt ist, mit entsprechenden verjüngten Aufnahmen (4a) des drehbaren Kronenrads (4) in Eingriff zu kommen, wobei ein derartiger Bolzen bei Herauskommen aus dem Hohlraum (1a) durch einen Betätiger (30) betätigt wird, welcher durch die zentrale, programmierende Steuereinheit in Bezug auf den Eingriff der Einrichtung zum Verriegeln (29) mit Kerben (9a) der Schaltscheibe (9) bei Beendigung einer jeden Umdrehung des Turms betätigt wird.

12. Ein Turm nach Anspruch 1, **dadurch gekennzeichnet**, daß eine derartige Einrichtung zum Verriegeln der Drehung des Kronenrads (4) und der Ausrichtung des feststehenden Kronenrads (2) und des drehbaren Kronenrads (4) aus einem einzigen radialen Bolzen (134) besteht, der mit einem freien Ende mit einem variablen Profil versehen ist, das dazu befähigt ist, mit geeigneten Aufnahmen (104) des Kronenrads (4) zusammenzuarbeiten, welche ihrerseits mit einer entsprechenden Gestaltung variablen Profils versehen sind.

13. Ein Turm nach Ansprüchen 1 und 12, **dadurch gekennzeichnet**, daß ein derartiges variables Profil des Endes des Bolzens (134) bzw. der Hohlräume (104) teils von kegelstumpfförmiger Gestalt (134b bzw. 104b) und teils von zylindrischer Gestalt (134c bzw. 104c) ist.

## Revendications

1. Une tourelle porte-outils pour des tours ou des centres d'usinage similaires comprenant :
- un boîtier de support (1) équipé d'une roue en couronne fixe (2) et portant un composant rotatif équipé d'une roue en couronne (4) à laquelle est fixé un plateau pour porter une pluralité d'outils, dont chacun est capable d'être transféré en position de travail par rotation dudit composant rotatif,
- un plateau d'indexation (9) fixé audit composant rotatif et monobloc avec une extrémité d'un arbre coaxial (6), les dents frontales (3, 5) desdites roues en couronne fixe (2) et rotative (4) étant capables d'être solidarisées l'une de l'autre par l'intermédiaire d'une bague (7) axialement mobile et munie de dents frontales (8) situées en face des dents (3, 5) desdites roues en couronne fixe et rotative et d'un profil de came (7a),
- des moyens (29) pour bloquer la rotation de ladite roue rotative en couronne (4),
- un moteur (12) pour faire tourner ledit arbre (6) par l'intermédiaire d'une roue d'engrenage (14) et d'une unité de transmission du type à train épicycloïdale comprenant un porte-satellites (16) portant des roues d'engrenage satellites (17) engrenées sur une roue d'engrenage centrale coplanétaire (18) coaxiale et rotative par rapport à l'arbre (6) et portant des rouleaux coopérant avec ledit profil de came (7a) pour ledit fonctionnement axial de la bague (7),
- des moyens de verrouillage (31) capables de coopérer avec des encoches (18c) d'un premier profilé circonférentiel (18b) de ladite roue d'engrenage centrale (18), de façon à bloquer ladite roue d'engrenage (18),
caractérisée en ce que ladite unité de transmission comporte une couronne dentée (15) entraînée par le moteur via la roue d'engrenage (14) et radialement engrenée sur le porte-satellites (16) par l'intermédiaire des roues d'engrenage satellites elles-mêmes, le porte-satellites (16) étant fixé pour tourner avec l'arbre (6) de telle façon que le mouvement de rotation imparti à la couronne dentée (15) soit transmis alternativement soit à la roue d'engrenage centrale (18) soit au porte-satellites et à l'arbre, et caractérisée par des moyens (32) de résistance à la rotation capable de co-opérer avec des cames (18e, 18f) d'un deuxième profilé circonférentiel (18d) de ladite roue d'engrenage centrale (18), et par des moyens de commande (34, 134) pour aligner les dents (5) de ladite roue rotative en couronne (4) par rapport aux dents (3) de la roue en couronne fixe (2),
- une telle combinaison permettant d'effectuer chaque cycle d'ouverture de tourelle, la rotation pour le changement d'outil et la fermeture de la tourelle avec une rotation continue du moteur (12) dans la même direction, la vitesse de rotation de la roue d'engrenage centrale (18) étant supérieure à la vitesse de rotation de la roue en couronne rotative (4), et également avec un bruit réduit d'engrènement axial des dents (8) de ladite bague (7) se déplaçant axialement sur les dents (3, 5) desdites roues en couronne fixe (2) et rotative (4).

2. Une tourelle épicycloïdale selon la revendication 1, caractérisée en ce que ledit premier profilé (18d) de la roue d'engrenage centrale (18) présente un développement sensiblement continu avec des cames (18e, 18f) réparties sur toute la circonférence.

3. Une tourelle épicycloïdale selon la revendication 1, caractérisée en ce que lesdites cames (18e, 18f) présentent respectivement, des flancs légèrement inclinés et des flancs fortement inclinés et sont disposés en alternance l'une par rapport à l'autre le long d'un profilé circonférentiel (18d).

4. Une tourelle épicycloïdale selon la revendication 1, caractérisée en ce que ledit premier profilé (18d) est un profilé extérieur de la roue d'engrenage centrale (18).

5. Une tourelle épicycloïdale selon la revendication 1, caractérisée en ce que lesdits moyens de résistance coopérant avec les cames (18e, 18f) sont constitués pour l'essentiel d'une broche de poussée (32) en contact avec les cames de moyen flexible (32a) réagissant contre le boîtier fixe (1) de la tourelle.

6. Une tourelle épicycloïdale selon les revendications 1 et 4, caractérisée en ce que ladite broche (32) est radiale.

7. Une tourelle épicycloïdale selon la revendication 1, caractérisée en ce que lesdites encoches (18c) dudit deuxième profilé circonférentiel (18b) de la roue d'engrenage centrale (18) présentent des discontinuités le long dudit profilé circonférentiel.

8. Une tourelle épicycloïdale selon la revendication 1, caractérisée en ce que ledit deuxième profilé (18b) est un profilé circonférentiel extérieur de la roue d'engrenage centrale (18).

9. Une tourelle épicycloïdale selon la revendication 1, caractérisée en ce que lesdits moyens de verrouillage (31) sont constitués pour l'essentiel d'une broche (31) reliée via un dispositif de levier (30a) à un loquet (29), lesdites broche et loquet étant actionnés par un organe d'actionnement (30) commandé par une unité centrale de commande programmant la séquence de changement d'outil.

10. Une tourelle épicycloïdale selon les revendications 1 et 8, caractérisée en ce que lesdits broche (31) et loquet (29) sont radiaux.

11. Une tourelle épicycloïdale selon la revendication 1, caractérisée en ce que lesdits moyens d'alignement des profilés des dents (3, 5) des roues en couronne rotative (4) et fixe (2) sont constituées pour l'essentiel d'une broche (34) capable de coulisser dans les deux directions à l'intérieur d'une cavité radiale (1a) du boîtier fixe (1) et munie d'une extrémité effilée capable de venir en contact avec des sièges correspondants effilés (4a) de la roue rotative en couronne (4), ladite broche étant actionnée lorsqu'elle émerge de la cavité (1a) par un organe d'actionnement (30) actionné par une unité centrale de commande de programmation en relation avec le contact des moyens de verrouillage (29) avec les encoches (9a) du plateau d'indexation (9) après la réalisation de chaque tour de la tourelle.

12. Une tourelle selon la revendication 1, caractérisée en ce que lesdits moyens de verrouillage de la rotation de la roue en couronne (4) et de l'alignement des roues en couronne fixe (2) et rotative (4) sont constituées d'une broche radiale unique (134) munie d'une extrémité libre à profil variable, capable de coopérer avec des sièges appropriés (104) de la roue en couronne (4) présentant à leur tour une forme correspondante à profil variable.

13. Une tourelle selon les revendications 1 et 12, caractérisée en ce que ledit profil variable de l'extrémité de la broche (134) et des cavités (104) présente partiellement une forme de tronc cône (134b, 104b) et partiellement une forme cylindrique (134c, 104c).
